# EUROPEAN PATENT APPLICATION

(11) **EP 2 896 545 A1**
(43) Date of publication of application: **22.07.2015**
(21) Application number: 14151592.4
(22) Date of filing: 17.01.2014
(51) Int. Cl.: B62D 1/16, B62D 1/19

(54) **Mounting structure for a steering column**

(71) Applicant: FORD MOTOR COMPANY, Dearborn, MI 48126 (US); Ford Otomotiv Sanayi Anonim Sirketi, 34885 Sancaktepe/Istanbul (TR)
(72) Inventor: Akköse, Kivanç, Sisli / Istanbul (TR); Alyanak, Altan, Maltepe / Istanbul (TR); Yasar, Fatih, Tuzla / Istanbul (TR); Yildirim, Mustafa Kemal, Kartepe / Kocaeli (TR)
(74) Representative: Illing, Rolf

(57) **Abstract**

A mounting structure for a steering column (2) of a vehicle comprises a housing (6) for holding an upper section of a steering shaft (4), the housing (6) having at least one side wall (8), a mounting member (16) with a cross wall to which the side wall (8) is attached, and at least one mounting bracket (10, 10') for supporting the housing (6) on a cross car beam (11), the mounting bracket (10, 10') extending in alignment with the at least one side wall (8).

## Description

The present invention relates to a mounting structure for a steering column of a vehicle, in particular for the steering column of a car or a truck.

In vehicles, such as cars or trucks, the driver is seated in a cabin or cockpit such that a steering wheel is placed in from of him. The steering wheel is connected to a steering gearbox by a steering shaft, the steering gearbox acting upon the front wheels. In order to permit convenient operation of the steering wheel by the driver, the steering wheel position may be adjustable to the driver's needs. To this end the steering shaft may be telescopic for adjustment in length and may have a universal joint for tilting an upper part of the steering shaft and the steering wheel. The steering shaft, an outer tube enclosing the steering shaft, and the adjustment mechanism are part of the steering column of the vehicle. The steering column may carry further elements, such as a starter lock and various switches and signaling devices. The steering wheel usually includes an airbag in order to protect the driver's chest and head in case of a collision.

In case of a serious front crash, however, the steering column and the steering wheel may be affected by the impact and protrude into the cockpit, thus increasing the driver's risk of serious injury. A considerable risk is due to the steering column moving towards the driver and/or lowering its position with respect to the cabin, such that the available space for the driver's legs is reduced. In particular, such undesirable movement of the steering column depends on the crash parameters, on vertical loads acting upon the steering column due to the crash and due to its own weight, and on the arrangement and fixation of the steering shaft and steering column with respect to other structures of the vehicle. Although the steering column usually is connected to the dashboard and/or to a cross car beam, in a serious front crash a lowering of the steering column may result, increasing the risk of injury to the driver's knees.

It is therefore an object of the present invention to provide a mounting structure for a steering column of a vehicle which eliminates or reduces the above mentioned drawbacks of known mounting structures. In particular it is an object of the present invention to provide a mounting structure which avoids lowering and/or bending of the steering column in case of a front crash and thus contributes to preserving the required space for the driver's legs.

This object is met by a mounting structure for a steering column according to claim 1. Advantageous embodiments of the present invention are indicated in the dependent claims.

A mounting structure for a steering column of a vehicle, which may be a car or a truck, comprises a steering column box or steering column housing which is configured for holding an upper section of the steering shaft of the vehicle. The housing is situated inside a driver's cabin in front of the driver. The housing holds a section of the steering shaft which is close to the steering wheel. The steering shaft generally is inclined with respect to a vertical direction, the degree of inclination depending on the type of vehicle. In particular, the steering shaft forms a smaller angle to the vertical direction in a truck than in a passenger car. The housing may comprise an adjustment mechanism for height or length adjustment of the steering shaft, and may accommodate a universal joint or at least one bearing of the steering shaft. The housing may be partially covered by an outer cover.

The steering column housing has at least one side wall extending substantially along a forward direction of the vehicle, in particular a left and/or right side wall as seen in the forward direction. The at least one side wall preferably is formed by a substantially flat piece of sheet metal. The steering shaft may be enclosed by the cover of the steering column housing, or may protrude from a lower end of the steering column housing to continue through the lower part of the cabin into the cabin floor or through the lower part of the dashboard cowl. The steering shaft may be at least partially enclosed by an outer tube.

The mounting structure further comprises a mounting member for mounting the housing to a structure of the vehicle which may be the dashboard and/or a cross car beam, in particular. The mounting member exhibits a cross wall which in particular is a back wall of the mounting member, as seen in a forward direction, which is the forward driving direction of the vehicle. The mounting member may be configured as a box or an angled piece with one or two side walls or lateral legs. The cross wall extends substantially perpendicular to the forward direction of the vehicle. The at least one side wall of the steering column housing is attached to the cross wall. In particular, the side wall is attached to a central section of the cross wall.

According to the present invention, the mounting structure further comprises at least one mounting bracket for supporting the housing on a cross car beam of the vehicle, the mounting bracket extending substantially in the forward direction and being arranged substantially in alignment with the at least on side wall of the steering column housing.

By arranging the mounting bracket substantially in alignment with the side wall, a direct transfer of force is achievable from the side wall of the steering column housing into the mounting bracket which in turn is supported by the cross car beam. In particular, the side wall is attached to the back wall of the mounting member, and the mounting bracket is arranged in a forward direction of the side wall, thus in effect forming a forward continuation of the side wall on the front side of the back wall of the mounting member. In this way even in the case of a serious front crash the steering column housing is sufficiently supported on the cross car beam, and bending or tilting of the steering column can be largely avoided. The present invention is particularly advantageous in trucks.

According to a preferred embodiment of the invention, the housing comprises two side walls spaced in a direction perpendicular to the forward direction of the vehicle, i.e. in a cross direction. Correspondingly, the mounting structure comprises two brackets each extending in alignment with a respective side wall of the steering column housing. The mounting member may be configured as a box with two side walls or as an angled piece of sheet metal with two lateral legs. For stability, the side walls or lateral legs of the mounting member may be spaced at a distance larger than the spacing between the side walls of the steering column housing, providing a broad base for fixation of the steering column housing. In this case the side walls of the steering column housing are attached to a central section of the cross wall. The mounting brackets serve to transfer any forward directed forces in a straight line towards the cross car beam. The cross wall of the mounting member is therefore relieved of bending forces, and a bending or tilting of the steering column can most safely avoided even in a serious front crash.

Preferably, the at least one mounting bracket extends in a forward and in a vertical direction of the vehicle. In particular, the mounting bracket may be configured as a flat sheet or plate, most preferably as a sheet metal plate. Most preferably, the sheet or plate is arranged standing vertically, extending thus in the forward and in the vertical directions, i.e. in a vertical plane that includes the forward direction. Such a configuration permits a lightweight design and low-cost manufacturing of the mounting bracket and an effective transfer of force.

According to a preferred embodiment, the mounting bracket comprises one or more reinforcement fins or corrugations which preferably extend along the forward direction of the vehicle. Alternatively or additionally, at least one edge of the mounting bracket is formed as a reinforcing rim or seam. In particular, an upper and/or lower edge of the mounting bracket or reinforced. In this way the force transfer capability of the mounting bracket is further increased and/or a lightweight design permitted.

Preferably, at least a back edge of the mounting bracket is crimped or broadened to form a connection area to which the cross wall of the mounting member connects. If the housing wall is interrupted, the at least one side wall of the steering column housing may directly connect to the connection area, otherwise it is indirectly connected via the cross wall. Further, a crimped or broadened front edge of the side wall may connect to the cross wall or the connection area of the mounting bracket. The mounting bracket may exhibit a crimped front edge to improve contact to the cross car beam.

As in a front crash mainly compressive forces act upon the arrangement of side wall, cross wall and mounting bracket, these elements may simply rest upon each other, such that contact is loosened under a tensile or lateral force. Preferably, however, the cross wall and the mounting bracket and/or the side wall may be rigidly connected to each other, for example by welding. In a similar manner, the at least one mounting bracket may rest on the cross car beam, but is preferably fixedly attached to the cross car beam. The stability of the mounting structure can be increased by fixed and rigid connections, thus improving crash properties even in an oblique or side impact.

The features of the invention as mentioned above and as described below apply not only in the combinations mentioned but also in other combinations or alone, without leaving the scope of the present invention.

Further aspects of the present invention will be apparent from the figures and from the description of a particular embodiment that follows.
- Fig. 1: shows a truck cockpit in a side view;
- Fig. 2: shows a section view of the cockpit of Fig. 1;
- Fig. 3: is an enlarged detail of Fig. 2;
- Fig. 4: shows the enlarged detail according to Fig. 3 in a perspective view;
- Fig. 5: depicts an arrangement of two mounting brackets in an enlarged perspective view.

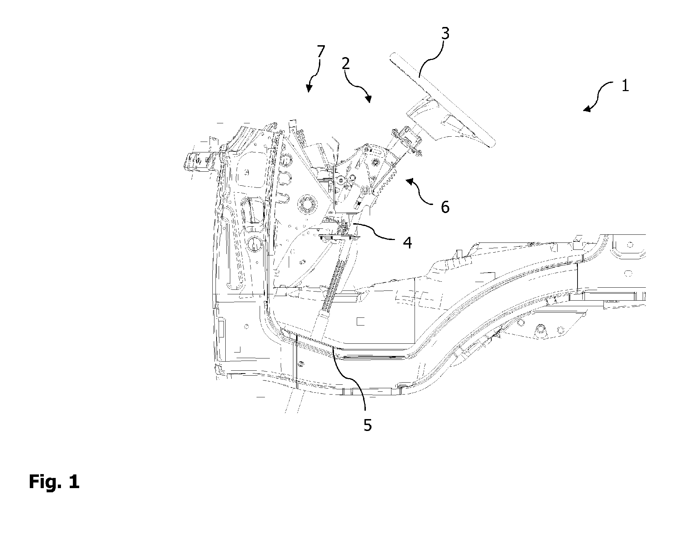

Fig. 1 shows an illustrative example of a truck cockpit 1 to which the further figures depicting an embodiment of the present invention relate. As can be seen in Fig. 1, in the cockpit a steering column 2 with steering wheel 3 is arranged. The steering wheel 3 is positioned for being operated by a driver for turning a steering shaft 4 which penetrates the cockpit bottom 5 to enter into a steering gearbox placed under the cockpit bottom 5 (not shown). An upper section of the steering shaft 3 is contained in a steering column housing 6 which accommodates an adjustment mechanism for adjusting the position and/or the tilt of the steering wheel 3 according to the needs of the driver. In particular, within the steering column housing 6 a universal joint and a telescopic section of the steering shaft 4 may be arranged, including means for loosening and blocking the adjustment mechanism (not shown in detail). The steering column housing 6 is held adjacent to the dashboard 7. A lower part of the steering shaft 3 runs free or enclosed in an outer tube between the steering column housing 6 and the cockpit bottom 5. A cover of the steering column housing as well as the driver's seat are not shown in the figures. The forward driving direction of the truck is to the left in Figs. 1, 2, and 3.

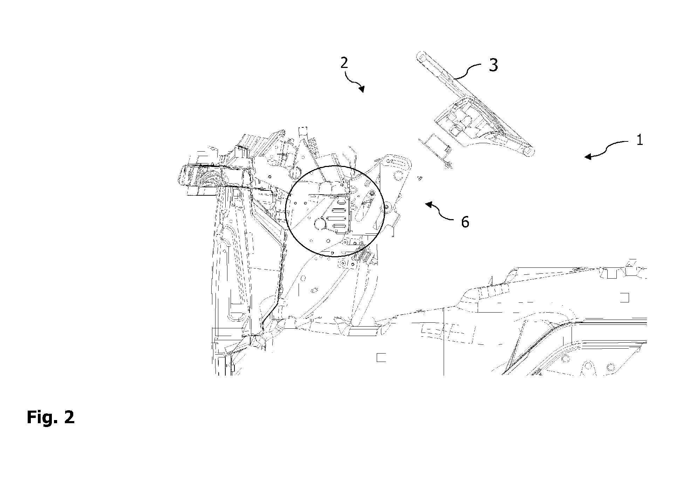

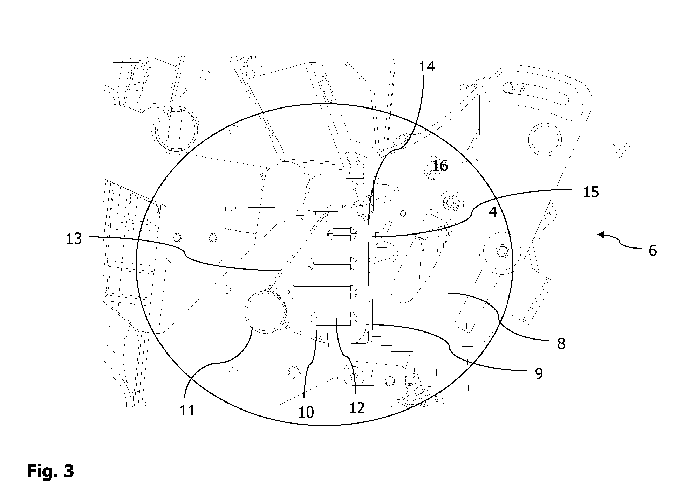

In the sectional view shown in Fig. 2, a section of the cockpit 1 parallel to the forward direction of the truck is taken slightly outside the steering shaft 4 (see Fig. 1), so that the steering shaft 4 and some elements of the steering column 3 and the steering column housing 5 do not show up in Fig. 2. The encircled part of Fig. 2 corresponds to the encircled part of Fig. 3.

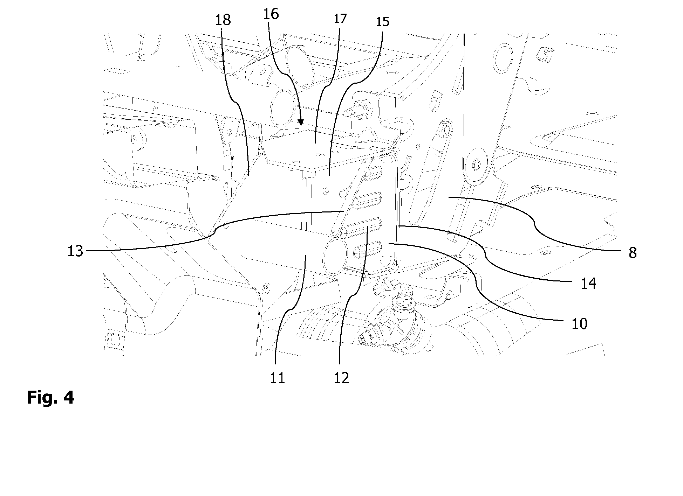

As can be seen in Fig. 3 in an enlarged view, the steering column housing 5 comprises a side wall 8 extending approximately in a plane defined by the forward direction (i.e. the driving direction of the truck) and the vertical direction. The side wall may be a substantially flat sheet metal with punched holes. Extending in the same plane in front of a front edge 9 of the side wall 8, forming a forward continuation of the side wall 8, a mounting bracket 10 is arranged. At its front end, the mounting bracket 10 is supported on, and preferably fixed to, a cross car beam 11 which is a hollow tube in the example shown. The mounting bracket 10 is a roughly triangular piece of sheet metal reinforced by corrugations 12 aligned in the forward direction, and reinforcement seams or rims 13 around its edges. Between the front edge 9 of the side wall 8 and the back edge 14 of the mounting bracket 10 a back wall 15 of a mounting member 16 is arranged, which is more clearly visible in Fig. 4.

As shown in Fig. 4, the mounting member 16 is a roughly box-shaped piece of crimped sheet metal with a back wall 15, an upper wall 17, and two side walls, only one side wall 18 being shown in Fig. 4. The cross wall or back wall 15 stands approximately vertical in a plane perpendicular to the forward direction. The upper wall 17 is roughly horizontal, and the side wall 18 is approximately parallel to the mounting bracket 10. The mounting member 16 connects the steering column housing 5 to the cross car beam 11, providing a wide base on the cross car beam 11 in order to avoid rotation of the steering column. The mounting member 16 may be connected to the dashboard, the dash cowl, and further structural elements of the truck.

As can be seen in Fig. 4, the side wall 8 of the steering column housing 6 is laterally displaced with respect to the side wall 18 of the mounting member 16, but is aligned with the mounting bracket 10, being arranged approximately in the same forward-directed vertical plane. In case of a front crash, the mounting bracket 10 therefore efficiently supports the side wall 8 of the steering column housing 6 and thus the steering column in total, avoiding dislocation, rotation and tilting of the steering column. To this end, supporting the back wall 15 of the mounting member 16 opposite the contact line of the side wall 8 of the steering column housing 6 in a forward direction is required. However, in order to increase stability, the side wall 8 of the steering column housing 6 and the back edge 14 of the mounting bracket may be fixed to the back wall 15 of the mounting member 16 or, if the back wall 15 is perforated, directly to each other, preferably by welding. This is facilitated by the reinforcement rim 13 of the mounting bracket 10 and a corresponding reinforcement rim of the side wall 8 of the steering column housing 6.

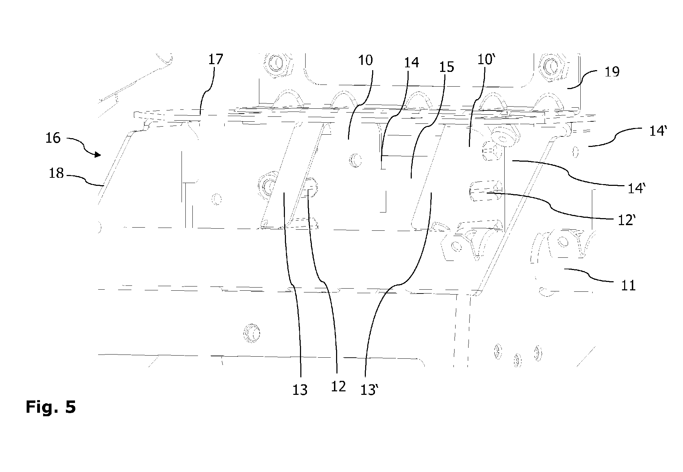

An arrangement of two parallel mounting brackets 10, 10' is shown in a near-frontal perspective view in Fig. 5. The right (as seen in the forward direction) mounting bracket 10 exhibits reinforcement corrugations 12 and a reinforcement rim 13 formed by crimping. Corrugations 12' and rim 13' of the left mounting bracket 10' are configured similarly, but in an opposing manner to those of the right mounting bracket 10. The back edges 14, 14' of the mounting brackets 10, 10' are fixed to the back wall 15 of the mounting member 16, which is approximately box-shaped with upper wall 17 and side walls 18, 18'. The upper wall 17 carries a holder 19 for holding components of the dashboard. The steering column housing which is not visible in Fig. 5 has two side walls being fixed on the backward side of the back wall (15) in alignment with the mounting brackets (10, 10')

For clarity not all reference numerals are shown in all figures. If a reference numeral is not explicitly mentioned in the description of a figure, it has the same meaning as in the other figures.

### List of Reference numerals

- 1: Cockpit
- 2: Steering column
- 3: Steering wheel
- 4: Steering shaft
- 5: Bottom
- 6: Housing
- 7: Dashboard
- 8: Side wall
- 9: Front edge
- 10, 10': Mounting bracket
- 11: Cross car beam
- 12, 12': Corrugation
- 13, 13': Reinforcement rim
- 14, 14': Back edge
- 15: Back wall
- 16: Mounting member
- 17: Upper wall
- 18, 18': Side wall
- 19: Holder

## Claims

1. Mounting structure for a steering column (2) of a vehicle, comprising a housing (6) for holding an upper section of a steering shaft (4), the housing (6) having at least one side wall (8), a mounting member (16) with a cross wall to which the at least one side wall (8) is attached, and at least one mounting bracket (10, 10') for supporting the housing (6) on a cross car beam (11), the mounting bracket (10, 10') extending in alignment with the at least one side wall (8).

2. Mounting structure according to claim 1,
**characterized in that**
the housing (6) comprises two side walls (8) and the mounting structure comprises two mounting brackets (10, 10') each extending in alignment with a respective side wall (8).

3. Mounting structure according to any one of the preceding claims,
**characterized in that**
the at least one mounting bracket (10, 10') extends in a forward and in a vertical direction.

4. Mounting structure according to any one of the preceding claims,
**characterized in that**
the at least one mounting bracket (10, 10') is configured as a flat sheet.

5. Mounting structure according to claim 4,
**characterized in that**
the at least one mounting bracket (10, 10') is formed by a sheet metal plate.

6. Mounting structure according to one claims 4 or 5,
**characterized in that**
the mounting bracket (10, 10') comprises one or more reinforcement fins or corrugations (12, 12').

7. Mounting structure according to any one of claims 4-6,
**characterized in that**
at least one side edge of the mounting bracket (10, 10') is formed as a reinforcing rim (13, 13').

8. Mounting structure according to any one of the preceding claims,
**characterized in that**
at least a back edge (14, 14') of the mounting bracket (10, 10') is crimped or broadened to form a connection area to which the cross wall or the at least one side wall (8) is connected.

9. Mounting structure according to any one of the preceding claims,
**characterized in that**
the at least one mounting bracket (10, 10') is fixedly connected directly or indirectly to the at least one side wall (8).

10. Mounting structure according to any one of the preceding claims,
**characterized in that**
the at least one mounting bracket (10, 10') is fixedly connected to the cross car beam (11).
